# EUROPEAN PATENT APPLICATION

(11) **EP 4 714 907 A1**
(43) Date of publication of application: **25.03.2026**
(21) Application number: 24383017.1
(22) Date of filing: 23.09.2024
(51) Int. Cl.: C02F 1/02, C02F 1/14, C02F 1/32, C02F 1/72, C02F 1/76

(54) **SYSTEM AND METHOD OF URBAN WASTEWATER TREATMENT BASED ON FRESNEL SOLAR CONCENTRATION TECHNOLOGY**

(71) Applicant: Universidad de Almeria, 04120 La Cañada de San Urbano (Almeria) (ES); FCC Aqualia, S.A., 28016 Madrid Madrid (ES)
(72) Inventor: Casas López, José Luis, Almería (ES); Rodríguez García, Daniel, Almería (ES); García Sánchez, José Luis, Almería (ES); Guzmán Sánchez, José Luis, Almería (ES); Sánchez Pérez, José Antonio, Almería (ES); Arbib, Zouhayr, Málaga (ES); del Amo Perez, Fernando, Madrid (ES); Rogalla, Frank, Madrid (ES)
(74) Representative: Pons IP

(57) **Abstract**

The invention relates to a system and a method for urban wastewater reclamation based on Fresnel solar concentration technology, which makes it possible to eliminate pathogenic microorganisms contained in urban wastewater (1), in order to reuse said wastewater as irrigation water in agriculture, by means of three essential features: solar concentration, energy recovery, and dosing of chemical agents under conditions of low solar radiation. The Fresnel-type solar concentrator (3) makes it possible to concentrate solar radiation on a transparent glass tube through which the wastewater circulates, increasing its temperature. In this way, the synergistic effect between the operating temperature and incident UV irradiance disinfects the water.

## Description

### OBJECT OF THE INVENTION

The present invention relates to a system and method for urban wastewater reclamation using a Fresnel-type linear solar concentrator and it mainly belongs to the technical field of chemical, environmental, agricultural, public works and civil engineering, where it is directly applicable in the sector of urban wastewater treatment and reclamation, as well as in agriculture. This system uses solar radiation to eliminate pathogenic microorganisms in wastewater, producing water suitable for reuse in agriculture.

### BACKGROUND OF THE INVENTION

Today, wastewater reclamation for use in agriculture is a growing global practice, driven by the scarcity of water resources and the need to find alternative, sustainable sources of water. Multiple techniques have been developed and applied for the effective treatment and disinfection of wastewater, ensuring that they meet the necessary quality standards for application in agriculture.

Some of the most commonly used techniques are filtration followed by chemical disinfection with agents such as chlorine or the use of ultraviolet radiation, as well as membrane technologies such as microfiltration and reverse osmosis. Advanced oxidation processes, such as ozonisation, are effective in eliminating micropollutants and pathogens. However, these methods entail a number of significant drawbacks: high energy consumption and high initial investment.

One of the solutions found in the state of the art is Spanish invention ES2393023A1, an urban wastewater purification and reclamation process and system that comprises means for intercepting wastewater from the public sewage system at a point close to that of its reuse, for its passage to pre-treatment and purification by means of total oxidation biological purification, and secondary clarification. The purified water is then reclaimed before being used to irrigate green areas. For said reclamation, the plant comprises filtration means for filtering by means of a sand filter and disinfection means for disinfecting by means of a UV reactor and by means of copper-silver ionisation technology. The reclaimed water is stored in a tank from where it is pumped to the irrigation network.

In addition, solutions based on the solar photo-Fenton process, which uses solar radiation to disinfect and decontaminate WWTP effluents, with relatively low investment and operating costs, are well known. Nevertheless, this treatment has a number of problems related to control and automation, which limits its application.

The state of the art also includes Chinese invention CN104907309A, an urban and rural resident domestic waste and wastewater ecological comprehensive treatment method and equipment, which after manually collecting and sorting urban and rural resident domestic waste, the organic matter and wastewater enter a pre-treatment pool.

A solar heater is arranged at the top part of the pool; the pool is also internally provided with a heating coil, and a cellular grid is arranged at the top part inside the pool. The materials after pre-treatment are subjected to acidified hydrolysis, anaerobic decomposition, separation by rapid infiltration and aerobic decomposition; after qualification through sample testing, the recovered water is discharged to the environment.

On-site treatment of domestic waste and wastewater saves land occupied by a waste landfill and a wastewater treatment plant to a large extent; costs related to waste transportation, labour, the construction of fields, and the construction of the wastewater collection pipe network are saved; a significant operating cost is saved; pollution of surface water and air by toxic wastewater and toxic air generated by the sewage system and the waste landfill can be effectively reduced or eliminated; the method is simple and feasible; and good social and environmental protection implications can be achieved.

Currently, wastewater reclamation is a field open to research on economically viable technologies, and the use of renewable energies, such as solar energy, represents an excellent alternative to reduce both operating costs and the carbon footprint.

### DESCRIPTION OF THE INVENTION

The invention proposed herein uses Fresnel-type solar concentration systems that use flat lenses or mirrors to focus solar radiation on a point, reaching high temperatures necessary for disinfecting water. In addition, the combination of concentrated ultraviolet radiation and the thermal effect significantly improves the efficiency of the system, allowing it to operate at lower temperatures to achieve an optimal level of disinfection. This technology overcomes the limitations of current methods, offering an efficient and sustainable solution for urban wastewater reclamation.

Thus, the present invention relates to a system for urban wastewater reclamation based on Fresnel solar concentration technology, which makes it possible to eliminate pathogenic microorganisms contained in urban wastewater, in order to reuse said wastewater as irrigation water in agriculture, by means of three essential features: solar concentration, energy recovery, and dosing of chemical agents under conditions of low solar radiation.

Given the invention described herein, the Fresnel-type solar concentrator makes it possible to concentrate solar radiation on a transparent glass tube through which the wastewater circulates, increasing its temperature. In this way, the synergistic effect between the operating temperature and incident UV irradiance disinfects the water.

These advantages are achieved by the system and the method of the claims accompanying this specification.

Moreover, said system incorporates a heat exchanger that makes it possible to automatically regulate the inlet flow of wastewater into the system and also acts as a thermal energy recovery stage, using the heat from the outlet water from the solar concentrator (treated water) to preheat the inlet wastewater into the system. In this way, the treated water passes through the heat exchanger, where it gives up part of its thermal energy to the wastewater entering the system, without there being any physical contact between the two fluids. This operation provides a twofold benefit: increased treatment capacity of the system derived from the preheating of the inlet wastewater, and reduced costs associated with lowering the temperature of the treated water to a suitable temperature that allows it to be directly reused as irrigation water in agriculture.

In order to maintain the temperature of the wastewater within an optimal range for disinfection, a temperature control mechanism is incorporated which automatically adapts the wastewater feed to the solar concentrator based on the ambient conditions, in order to establish a stable set operating temperature in the glass tube and therefore, a stable treated water quality.

The system also includes a filtration unit for removing solid particles from the wastewater prior to solar treatment, as well as a dosing unit for disinfection-enhancing chemical agents, such as hydrogen peroxide or sodium hypochlorite, configured to be automatically activated under conditions of low solar radiation.

The integration of the three features described above (solar concentration, energy recovery, and chemical agent dosing) makes it possible to significantly increase water treatment capacities and address the challenge associated with variability in solar radiation availability, especially on cloudy days or days with low radiation.

### DESCRIPTION OF THE DRAWINGS

As a complement to the description provided herein, and for the purpose of helping to make the features of the invention more readily understandable, in accordance with a preferred practical exemplary embodiment thereof, said description is accompanied by a set of drawings constituting an integral part of the same, wherein by way of illustration and not limitation, the following has been represented:

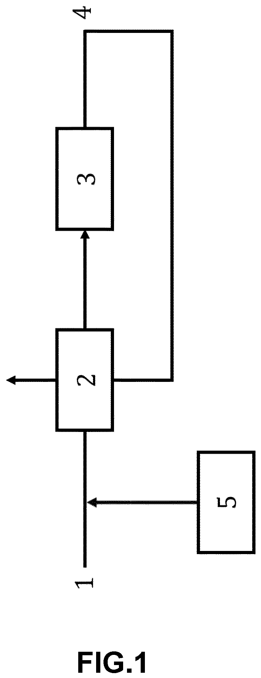

Figure 1 shows a diagram of the system and method for urban wastewater reclamation based on Fresnel solar concentration technology, object of the present invention.

### PREFERRED EMBODIMENT OF THE INVENTION

As can be seen in figure 1, the system and method for urban wastewater reclamation based on Fresnel solar concentration technology, object of the present invention, comprises a wastewater (1) inlet; a heat exchanger (2), which absorbs the heat released by the treated water (4) leaving the solar concentrator (3) to preheat the inlet wastewater (1); a filtration unit for removing solid particles from the wastewater (1) prior to solar treatment; a Fresnel-type solar concentrator (3), comprising a plurality of flat mirrors arranged at a predetermined angle to concentrate solar radiation in a focal line; a treatment vessel connected to the solar concentrator (3), where the wastewater (1) is exposed to the combination of ultraviolet radiation and heat generated by the solar concentrator (3) to eliminate pathogenic microorganisms in the wastewater (1); a temperature control mechanism to maintain the temperature of the wastewater (1) within an optimal range for disinfection; as well as a treated water outlet (4), where the treated water is collected and stored for reuse in agriculture.

Additionally, it is envisaged that the system incorporates a solenoid valve proportional to the inlet of the heat exchanger to automatically regulate the inlet of wastewater into the solar concentrator, so that its opening/closing is done automatically to maintain a stable and user-defined operating temperature at the outlet of the solar concentrator (3). To do this, a control algorithm is used that takes into account both the real-time value of the temperature of the treated water at the outlet of the solar concentrator and environmental variables (solar radiation, relative humidity, wind speed, position of the sun, etc.).

The system may include a dosing unit (5) for disinfection-enhancing chemical agents, such as hydrogen peroxide or sodium hypochlorite, configured to be automatically activated under conditions of low solar radiation. The dosing of the chemical agent is activated when the ambient conditions are not favourable, and therefore it is not possible to reach a certain minimum operating temperature. In this way, it is possible to ensure the quality of the reclaimed water at intervals of unplanned cloudy days.

The treatment vessel may include additional ultraviolet lamps to increase the effectiveness of eliminating pathogenic microorganisms.

It is also envisaged that the Fresnel-type solar concentrator (3) may be configured to concentrate solar radiation on a transparent glass tube that is 63 millimetres in diameter, has a height of 3.5 metres, and reaches a temperature of between 50 and 80 degrees.

The temperature control mechanism comprises temperature sensors and a controller that adjusts the position of the mirrors of the solar concentrator (3) to regulate the amount of solar radiation concentrated on the treatment vessel, and the control mechanism monitors environmental variables such as relative humidity, ambient temperature, wind speed, position of the sun, and solar radiation to optimise system operation. If solar radiation drops below a certain limit during regular operation of the plant, the control mechanism activates the dosing unit (5). This prevents the plant from shutting down due to the occasional presence of clouds, as the quality of the reclaimed water is guaranteed at said intervals.

Preferably, the treated water outlet (4) is stored in a tank of the water tank, water vat or other type with equivalent mechanical characteristics.

Moreover, the treatment vessel may be made of materials resistant to ultraviolet radiation and high temperatures or other materials with equivalent mechanical characteristics.

The system described above carries out a method comprising:
(a) a first wastewater (1) inlet stage to the system;
(b) a second solar collection stage to concentrate solar radiation on a glass tube transparent to ultraviolet radiation;
(c) a third filtration stage to remove solid particles from the wastewater prior to solar treatment;
(d) a fourth treatment stage where the wastewater is exposed to concentrated solar radiation;
(e) a fifth disinfection stage that uses the combination of ultraviolet radiation and heat generated by the solar concentrator to eliminate pathogenic microorganisms in the wastewater, and where a dosing unit (5) for disinfection-enhancing chemical agents is configured to be automatically activated under conditions of low solar radiation;
(f) a sixth treated water outlet stage, where the treated water is collected and stored for reuse in agriculture; and
(g) a seventh energy recovery stage based on a heat exchanger, which absorbs the heat released by the reclaimed water leaving the solar concentrator.

## Claims

1. A system for urban wastewater reclamation based on Fresnel solar concentration technology, **characterised in that** it comprises:
a wastewater (1) inlet,
a Fresnel-type solar concentrator (3), comprising a plurality of flat mirrors arranged at a predetermined angle configured to concentrate solar radiation in a focal line on a transparent tube through which the wastewater (1) circulates,
a filtration unit for removing solid particles from the wastewater (1) prior to solar treatment,
a treatment vessel connected to the solar concentrator (3), where the wastewater (1) is exposed to the combination of ultraviolet radiation and heat generated by the solar concentrator (3) to eliminate pathogenic microorganisms in the wastewater (1),
a temperature control mechanism to maintain the temperature of the wastewater (1) within an optimal range for disinfection,
a treated water outlet (4), where the treated water is collected and stored for reuse in agriculture; and
a heat exchanger (2), which automatically regulates the inlet flow of wastewater (1) and absorbs the heat released by the treated water (4) leaving the solar concentrator (3) to preheat the inlet wastewater (1).

2. The system of claim 1, further comprising a dosing unit (5) for disinfection-enhancing chemical agents configured to be automatically activated under conditions of low solar radiation.

3. The system of claim 2, wherein the disinfection-enhancing chemical agents is one selected from hydrogen peroxide, sodium hypochlorite or a combination thereof with one or more disinfectants.

4. The system of claim 1, wherein the transparent glass tube is 63 millimetres in diameter, arranged at a height of 3.5 metres, and reaches a temperature of between 50 and 80 degrees.

5. The system of claim 1, wherein the temperature control mechanism comprises temperature sensors and a controller that adjusts the position of the mirrors of the solar concentrator (3) to regulate the amount of solar radiation concentrated on the treatment vessel.

6. The system of claim 1, wherein the treatment vessel includes additional ultraviolet lamps to increase the effectiveness of eliminating pathogenic microorganisms.

7. The system of claim 1 or 6, wherein the treatment vessel is made of materials resistant to ultraviolet radiation and high temperatures.

8. The system of claim 5, wherein the control mechanism monitors environmental variables such as relative humidity, ambient temperature, wind speed, position of the sun, and solar radiation to optimise system operation.

9. The system of claim 1, further comprising a solenoid valve proportional to the inlet of the heat exchanger to automatically regulate the inlet of wastewater into the solar concentrator, so that its opening/closing is done automatically to maintain a stable and user-defined operating temperature at the outlet of the solar concentrator (3).

10. A method for urban wastewater reclamation in a system according to any one of the preceding claims, comprising the following stages:
wastewater (1) inlet to the system,
solar collection to concentrate solar radiation on a glass tube transparent to ultraviolet radiation,
filtration for removing solid particles from the wastewater prior to solar treatment, treatment, where the wastewater is exposed to concentrated solar radiation, disinfection, which uses the combination of ultraviolet radiation and heat generated by the solar concentrator to eliminate pathogenic microorganisms in the wastewater, and where a dosing unit (5) for disinfection-enhancing chemical agents is configured to be automatically activated under conditions of low solar radiation,
outlet of the treated water, where the treated water is collected and stored for reuse in agriculture,
energy recovery based on a heat exchanger, which absorbs the heat released by the reclaimed water leaving the solar concentrator.
